# EUROPEAN PATENT APPLICATION

(11) **EP 1 927 456 A1**
(43) Date of publication of application: **04.06.2008**
(21) Application number: 06810680.6
(22) Date of filing: 21.09.2006
(51) Int. Cl.: B29C 45/16, B29C 45/17, B29C 45/26, B29L 11/00

(54) **MOLD DEVICE FOR FORMING BLOW MOLDED PRODUCT AND METHOD FOR FORMING BLOW MOLDED PRODUCT**

(30) Priority: 22.09.2005 JP 2005276495; 04.09.2006 JP 2006238503
(71) Applicant: Canon Mold Inc., Kasama-shi Ibaraki 309-1703 (JP)
(72) Inventor: IIMURA, Kazunori, Kasama-shi, Ibaraki 3091703 (JP); SAKUMA, Yuuji, Kasama-shi, Ibaraki 3091703 (JP); KINASE, Yoshihiro, Kasama-shi, Ibaraki 3091703 (JP); NAKATA, Hiroshi, Kasama-shi, Ibaraki 3091703 (JP)
(74) Representative: TBK-Patent
(86) International application number: PCT/JP2006/319222
(87) International publication number: WO 2007/034983

(57) **Abstract**

A mold apparatus for producing a hollow molded article, which can cope with a hot runner specification and facilitate operations for exchanging consumptions of a film formation apparatus or the like without difficulty for arranging a sprue, and a method for producing a hollow molded article. The mold apparatus includes a first molding part for molding a first divided body and a second molding part for molding a second divided body between a first mold and a second mold, and further includes a film formation part in addition to the molding parts, so as to mold a hollow molded article, wherein the film formation part, the first molding part and the second molding part are linearly arranged in this order.

## Description

### TECHNICAL FIELD

The present invention relates to a mold apparatus for producing a hollow molded article and a method for producing the hollow molded article, and more particularly to a mold apparatus for producing a hollow molded article including a film formation surface, and a method for producing the hollow molded article.

### BACKGROUND ART

Conventionally, it is well known to mold a hollow molded article by die-slide injection.

For example, Japanese Patent Publication No. H02-038377 supposes a method for molding a hollow molded article by molding divided bodies from a pair of a male mold and a female mold (primary molding), and sliding one of the molds to oppose the divided bodies to each other, and then melt the bodies to each other with a molten resin (secondary molding).

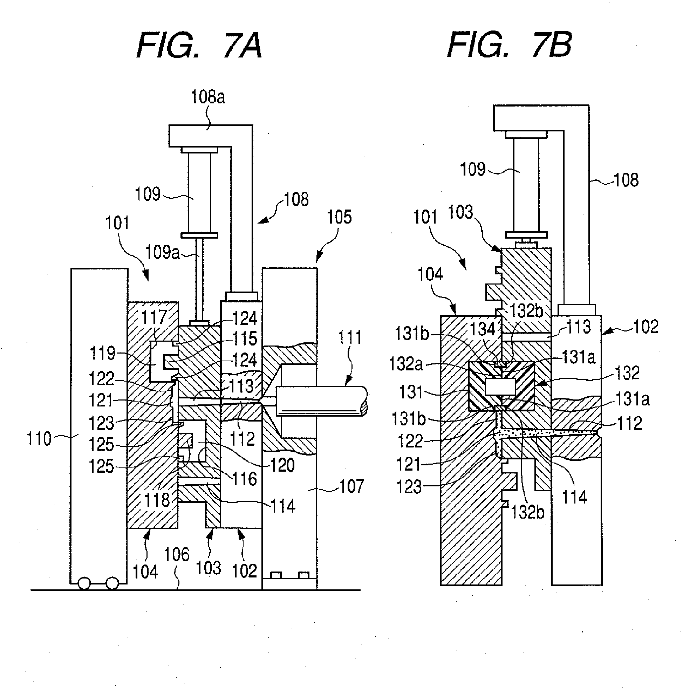

As shown in FIG. 7A, this method uses a stationary mold 102 having a single sprue 112, a slide mold 103 which is moved to two positions along the stationary mold 102, and a movable mold 104 to be matched with the slide mold 103.

The slide mold 103 is provided with a male mold 115 and a female mold 116 for molding a hollow molded article, and sub-sprues 113 and 114 communicated with the sprue 112 of the stationary mold 102 are provided at the above-mentioned two positions.

Also, a female mold 117 and a male mold 118 which are opposed to the male mold 115 and the female mold 116 of the slide mold 103 are provided to the movable mold 104.

A hollow molded article can be molded by such a mold as follows.

First, the molten resin is injected into a pair of cavities 119 and 120 which are formed between the male molds 115 and 118 and the female molds 116 and 117 opposed to each other to form each of the divided bodies 131 and 132. At that time, the molten resin injected from an injection machine 111 is introduced into the cavities 119 and 120 from a runner 121 and gates 122 and 123 through the sub-sprues 113 and 114.

Then, the mold 103 is slid from the lowest position where a sliding cylinder 109 is extended as shown in FIG. 7A to the uppermost position where the sliding cylinder 109 is shrunk as shown in FIG. 7B, so that the slide mold 103 is matched with the movable mold 104.

In this manner, after the respective divided bodies 131 and 132 are opposed and butted against each other, the molten resin is injected around butt surfaces 131a and 132a to weld the divided bodies 131 and 132 with each other, so that a hollow molded article is molded.

Also, Japanese Patent Application Laid-Open No. 2004-338328 proposes a molding method which uses a die-slide injection including a vapor deposition step when a light body which is a hollow molded article is molded.

This application includes a vapor deposition step of vacuum depositing a reflection face on an inside face of the light body between a primary molding step of molding a light body and a lens part, and a secondary molding step of butting and integrating the light body and the lens part, wherein a vacuum deposition apparatus is installed to a stationary mold.

Regarding die-slide injection including a vapor deposition step, the following problems occur, for example, as disclosed by Japanese Patent Application Laid-Open No. 2004-338328, a portion subjected to a vapor deposition step is provided between portions subjected to the primary molding step and the secondary molding step.

That is to say, the portions subjected to the primary molding step and the secondary molding step are arranged on both sides of the portion subjected to the vapor deposition step.

Therefore, unlike the above-described Japanese Patent Publication No. H02-038377 which includes only the divided body forming step and the divided body jointing step, it is required to arrange the sprues across a long distance to both ends of the mold.

Also, such a sprue must be arranged to avoid the vapor deposition apparatus (film formation apparatus) which is incorporated into the vapor deposition step. Therefore, it becomes very difficult to arrange the sprue.

In the case of a hot runner specification, this caused difficulty to arrange a manifold.

In order to increase the molding efficiency, a hot runner is generally used in which a runner is formed in the manifold having a heat formed therein so as to keep the molten resin from the sprue runner to a vicinity of the gate always at the molten state.

When the vapor deposition apparatus (film formation apparatus) is located at the center of the mold, this causes difficulty in such arrangement of the manifold.

Also, the vapor deposition apparatus (film formation apparatus) has no resistance to heat. Therefore, in some cases such as in Japanese Patent Application Laid-Open No. 2004-338328 wherein the vapor deposition apparatus (film formation apparatus) is installed between the primary molding step and the secondary molding step, it is necessary to provide a separate cooling unit.

Furthermore, in an operation for exchanging targets which are consumables of the vapor deposition apparatus (film formation apparatus) and an operation for cleaning a masking plate which is caused regularly, when the vapor deposition apparatus (film formation apparatus is located at the center of the mold, workability becomes deteriorated, which also causes a problem.

### DISCLOSURE OF THE INVENTION

An object of the present invention is to provide a mold apparatus for producing a hollow molded article, which can cope with a hot runner specification and facilitate operations for exchanging consumptions of a film formation apparatus without difficulty for arranging sprues, and a method for producing a hollow molded article.

To achieve the above-mentioned object, the present invention provides a mold apparatus for producing a hollow molded article with a following constitution, and a method for producing a hollow molded article.

The mold apparatus of the present invention has the following features.

The mold apparatus according to the present invention includes a first mold and a second mold having a first molding part for molding a first divided body of the molded article, a second molding part for molding a second divided body of the molded article, and the first mold having a film formation part for forming a film on at least a part of the divided bodies, wherein the first mold and/or the second mold are slid to position the first molding part of the second mold with the film formation part, the first molding part of the first mold, or the second molding part of the first mold, and wherein the film formation part, the first molding part of the first mold and the second molding part of the first mold are linearly arranged in this order.

Also, the mold apparatus according to the present invention is characterized in that the first molding part is a main body molding part, and the second molding part is a lens molding part.

The mold apparatus according to the present invention is characterized in that the first mold is a stationary mold, and the second mold is a slide mold provided on a movable mold which is driven in a direction away from the stationary mold at the time of mold opening.

The mold apparatus according to the present invention is characterized in that the first mold is the movable mold and the second mold is a slide mold which is provided on the stationary mold.

The mold apparatus according to the present invention is characterized in that a masking plate is detachably attached onto a surface of the film formation part of the first mold opposed to the second mold.

The method for producing a hollow molded article according to the present invention has the following features.

That is to say, in the method for producing a hollow molded article according to the present invention, using a mold apparatus including a first mold and a second mold having a first molding part for molding a first divided body of the molded article, a second molding part for molding a second divided body of the molded article, and the first mold having a film formation part, the method includes: a primary molding step of molding divided bodies of a molded article by the first mold and the second mold, respectively; the first mold and/or the second mold are slid to position the first molding part of the second mold with the film formation part; a film formation step of forming a film on at least a part of the first divided body; the first mold and/or the second mold are slid to position the first molding part of the second mold with the second molding part of the first mold; and a secondary molding step of butting the divided bodies against each other at butt parts thereof and injecting a resin to the butt parts, wherein the film formation part, the first molding part and the second molding part are provided in the first mold in this order to mold a hollow molded article.

The method for producing a hollow molded article according to the present invention is characterized in that a masking plate is detachably attached on a surface of the film formation part of the first mold opposed to the second mold, the first mold and/or the second mold are slid to position the first molding part of the second mold with the second molding part of the first mold, the masking plate is detached, and maintenance of a film formation unit provided on the film formation part is performed.

The present invention can realize a mold apparatus for producing a hollow molded article and a method for producing a hollow molded article, which facilitate operations for exchanging consumptions of a film formation apparatus without causing difficulties in arrangement of sprues or thermal influences.

Further features of the present invention will become apparent from the following description of exemplary embodiments with reference to the attached drawings.

### BRIEF DESCRIPTION OF THE DRAWINGS

FIGS. 1A and 1B illustrate a primary molding step using a mold for molding a hollow molded article in an embodiment of the present invention.
FIGS. 2A and 2B illustrate a film formation step using a mold for molding a hollow molded article in an embodiment of the present invention.
FIGS. 3A and 3B illustrate a secondary molding step using a mold for molding a hollow molded article in an embodiment of the present invention.
FIG. 4 illustrates one example of an article molded using a molding mold according to the present invention.
FIGS. 5A and 5B illustrate a masking plate.
FIG. 6 illustrates a guide post.
FIGS. 7A and 7B illustrate a conventional method for molding a hollow molded article by die-slide injection disclosed by Japanese Patent Publication No. H02-038377.

### BEST MODE FOR CARRYING OUT THE INVENTION

Exemplary embodiments for carrying out the present invention will be described with reference to the following embodiments.

A mold for producing a hollow molded article, and a method for producing a hollow molded article in embodiments of the present invention will be described with reference to the drawings as follows. The drawings include a stationary mold 1, a movable mold 2, a slide mold 3, a film formation apparatus 4, a body molding part (a first molding part) 5 of the stationary mold, a lens molding part (a second molding part) 6 of the stationary mold, a ball screw 7, a slide 8, a servomotor 9, a body molding part (a first molding part) 10 of the slide mold, a lens molding part (a second molding part) 11 of the slide mold, a linear encoder 12, a scale 13, a masking plate 14, a body 31, a lens part 32, a cavity 41, a cavity 49, a sprue 50, a guide hole 51, and a guide post 52.

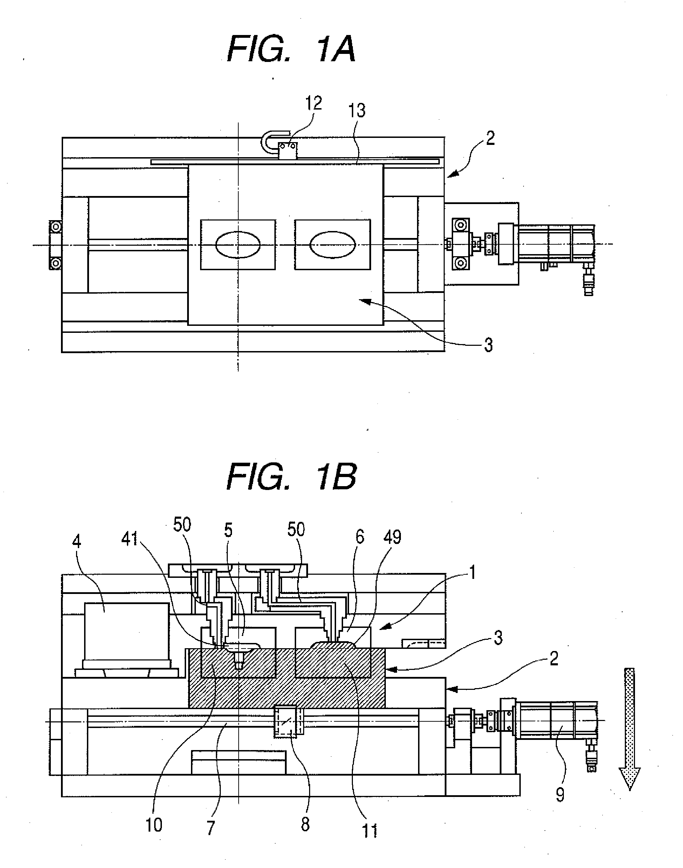

FIGS. 1A and 1B illustrate a primary molding step using a mold for molding a hollow molded article in this embodiment.

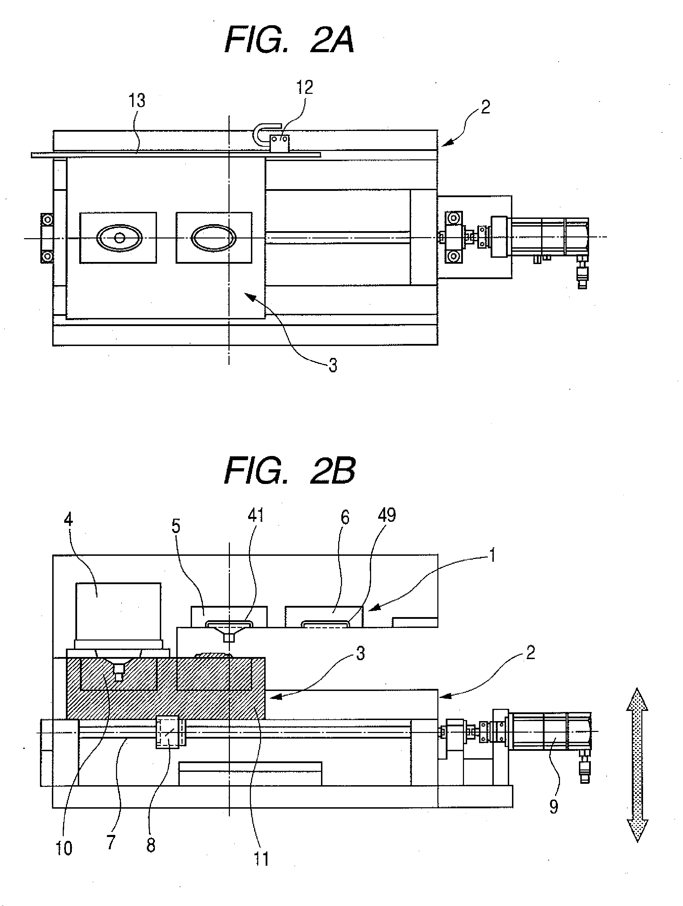

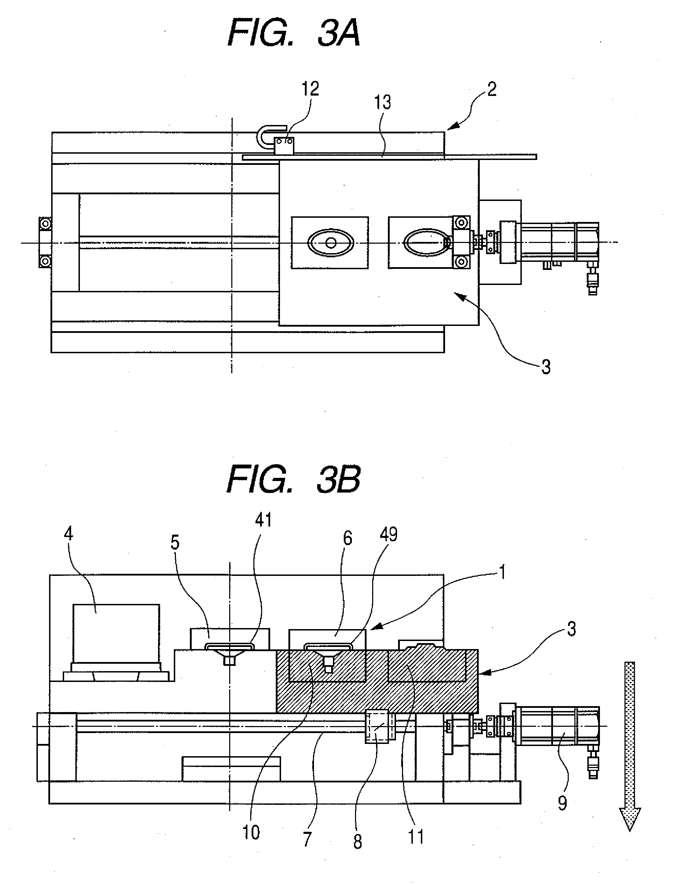

FIGS. 2A and 2B illustrate a film formation step using a mold for molding a hollow molded article in this embodiment, and FIGS. 3A and 3B illustrate a secondary molding step using a mold for molding a hollow molded article in this embodiment.

FIGS. 1A, 2A and 3A are schematic views seen from a left side face of the mold under a condition that a stationary mold is removed, and FIGS. 1B, 2B and 3B are schematic views seen from above of the mold. The mold is adapted to be operated from the left side (the film formation apparatus 4 side) in the drawings.

In FIGS. 1A and 1B, a first mold 1 is a stationary mold whose position is fixed and which is not moved at the time of mold releasing. A movable mold 2 can move in a direction for being separated from the stationary mold at the time of mold releasing.

A second mold 3 with molding parts for forming divided bodies of a molded article is a slide mold which slides against the stationary mold 1 by a below-described sliding mechanism.

The movable mold 2 is released in a right direction (a downward direction in the drawing) against the stationary mold by a mold opening/closing mechanism (not shown) together with the slide mold 3 which is the second mold in this embodiment.

The slide mold 3 is provided to the movable mold 2, and a drive mechanism for sliding the slide mold 3 is constituted.

The slide mold 3 includes a body molding part (a first molding part) 10 corresponding to the body molding part (a first molding part) 5 of the stationary mold 1, and a lens molding part (a second molding part) 11 corresponding to the lens molding part (a second molding part) 6 of the stationary mold.

The lens molding part (a second molding part) 11 of the slide mold has a cavity 49 which molds a lens part (a second divided body) in a pair with the lens molding part (a second molding part) 6 of the stationary mold.

Also, the body molding part (a first molding part) 10 of the slide mold has a cavity 41 which molds a body (a first divided body) in a pair with the body molding part (a first molding part) 5 of the stationary mold.

In this embodiment, the slide mold is provided to the movable mold 2, but the slide mold may be provided to the stationary mold 1.

In that case, the first mold is a movable mold, and the second mold is a slide mold which is provided on the stationary mold. Additionally, the slide molds may be provided to both of the first and second molds.

Also, in the mold apparatus according to the present invention, the film formation part 4, the body molding part (a first molding part) 5 for the stationary mold, and the lens molding part (a second molding part) 6 for the stationary mold are linearly provided to the stationary mold 1 at equal intervals.

Furthermore, these parts are connected with an injection molding machine, and provided with sprues 50 which supply a resin to the body molding part 5 and the lens molding part 6 of the stationary mold.

Because the film formation part is arranged so as to avoid the position between the first molding part and the second molding part, sprues and runners for supplying the resin to the molding parts can be easily arranged.

Also, the film formation apparatus which has a poor resistance to heats can be arranged at a position as far as possible from a heat source, so that influences on the film formation apparatus by heats can be minimized.

The film formation apparatus is arranged inside the film formation part of the stationary mold. Because a normally used film formation apparatus is used in the present invention, detailed description will be omitted, but film formation is generally formed as follows.

At the time of forming a film, the inside of the film formation apparatus is made vacuum by a vacuum pump (not shown), and high energy particles are collided with the surface of a target, so that atoms of the target are discharged. The film is formed on the inner surface of the main body using a spattering method for forming a film on the inner surface of a body 31.

A masking plate is detachably attached to a surface of the film formation part of the stationary mold 1 opposed to the slide mold.

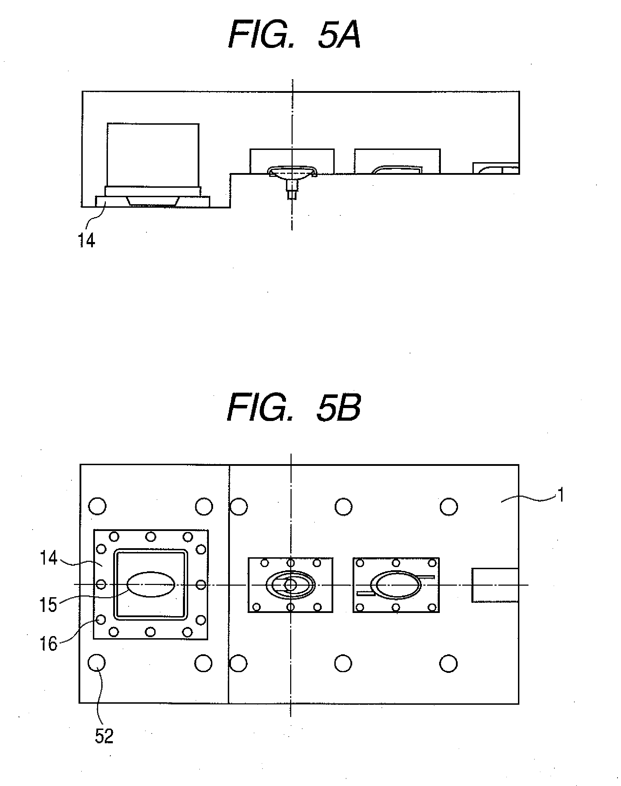

FIGS. 5A and 5B illustrate a masking plate.

FIG. 5A is a schematic view seen from the position above the mold, and FIG. 5B is a plane view of a stationary mold parting line plane. The masking plate 14 is provided with a hole 15, and performs masking so as to be vapor deposited on only the required portions of the molded article.

The masking plate is attached to not the film formation apparatus, but the stationary mold 1, so that accuracy of alignment with the molded article can become high.

After vapor deposition is repeated several times, vapor-deposited substances adhered on the masking plate 14 may be exfoliated. The exfoliated substances may be adhered to the molded article to cause defective articles.

To prevent the defective articles, a regular cleaning is required. In the mold apparatus according to the present invention, the masking plate 14 is detachably attached to the stationary mold 1 by bolts 16.

Also, the film formation part is positioned at the end of the stationary mold, and a space is formed on the surface of the film formation part of the stationary mold 1 opposed to the slide mold by moving the slide mold, so that the masking plate can be easily detached from the stationary mold and can be simply cleaned.

The detached portion serves as an opening, so that maintenance such as exchange of a target in the film formation apparatus can be easily done.

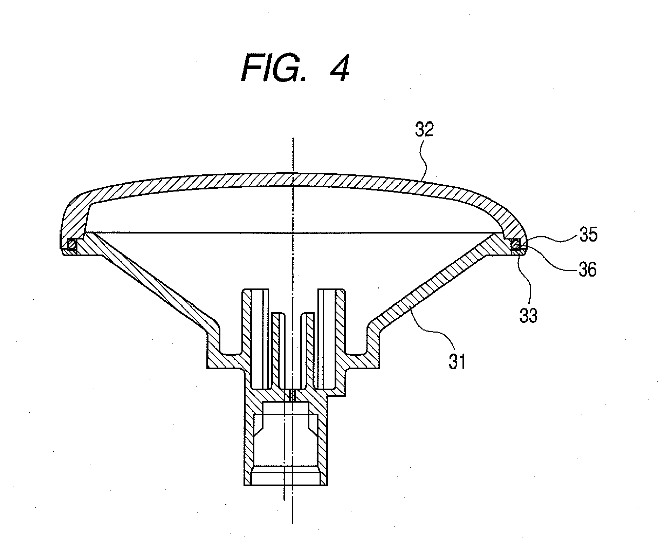

FIG. 4 illustrates one example of a hollow molded article which is molded by the molding mold according to the present invention.

In FIG. 4, the hollow molded article in this embodiment includes a body 31 having an inner surface on which a film is formed, and a lens part 32. Butt parts 35 and 36 of the parts are made to butt against each other, and a space 33 is formed by the butt parts. A molten resin which is injected from the injection molding machine is filled in the space through the sprues. The body part and the lens part are molten with each other by the resin in the space to mold a hollow molded article.

Then, a method for producing a hollow molded article according to the present invention will be described.

First, a primary molding step will be described.

The servomotor 9 is driven, and the slide mold 3 is positioned at the center of the mold which is the molding part of the primary molding step by the ball screw 7.

The slide mold 3 is positioned at a position of the primary molding step which is a first positioning position by deviation between a conveying amount input in a control apparatus in advance and a rotation amount of the ball screw detected by an encoder.

The movable mold 2 is moved to the side of the stationary mold 1 by the mold opening/closing device, so that the slide mold 3 is matched with the stationary mold 1.

At that time, a guide post and a guide hole for positioning the slide mold are provided on the parting line of the slide mold and the stationary mold.

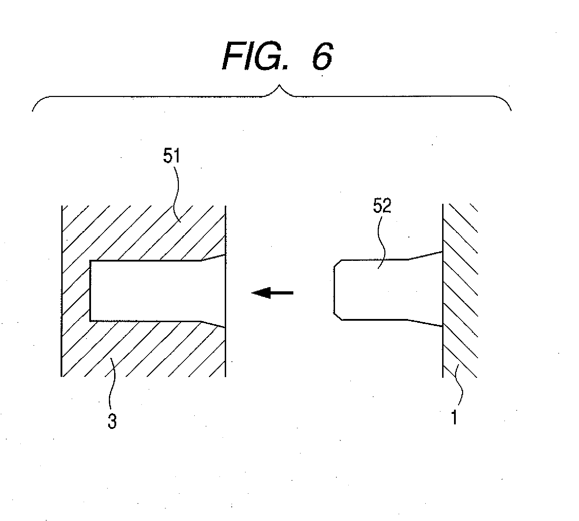

FIG. 6 is a schematic view of the guide post. The guide hole 51 has a tapered insertion port, so that the guide post 52 is smoothly fitted with the guide hole 51 even when the guide post 52 is inserted at a slightly deviated position.

The guide post 52 also has a tapered portion to be fitted with the tapered portion of the guide hole 51, when the guide post is completely inserted.

In this embodiment, four guide holes 51 are bored on the slide mold, and ten guide posts 52 are provided at positions opposed to the guide holes 51 on the opposite surface of the stationary mold to be positioned.

The guide posts may be attached to the stationary mold, and the guide holes may be provided on the slide mold.

Immediately before the guide posts 52 are inserted in the guide holes 51, signals are transmitted to a power supply control device from the mold opening/closing device.

By the signals, the power supply control device outputs signals for stopping the power supply to the servomotor, and the servomotor is unlocked, so that the guide posts 52 are inserted in the guide holes 51 under a condition that the slide mold is movable.

Thereby, the stationary mold and the slide mold are precisely positioned. Because the power supply to the servomotor is stopped, this position is corrected as a position corresponding to the conveying amount input to the control device in advance.

In this manner, after the molds are matched at high precision, the molds are clamped. FIGS. 1A and 1B illustrate this state, and cavities 41 and 49 are formed between the stationary mold 1 and the slide mold 3.

In this state, the molten resin is injected from the injection molding machine attached to the stationary mold 1.

The molten resin is filled in the cavities 41 and 49 through the sprues 50 of the stationary mold. In this manner, the body 31 and the lens part 32 which are divided bodies of the molded article are formed, respectively (see FIG. 4).

The movable mold 2 is moved in the downward direction of the drawing by the mold opening/closing device, so that the slide mold 3 is separated from the stationary mold 1 to perform mold opening.

Thereby, the body 31 remains in the slide mold 3 and is released from the stationary mold 1. Meanwhile, the lens part 32 remains in the stationary mold 1 and is released from the slide mold 3.

After completion of mold opening, signals are transmitted to the power supply control device. By the signals, the power supply control device outputs signals for starting the power supply to the servomotor, so that the power supply to the servomotor is started.

Then, the film formation step will be described.

The servomotor 9 is driven, and the slide mold 3 is positioned at a front part of the mold (on the left side of the drawing) which is a molding part of the film formation step by the ball screw 7.

The slide mold 3 is positioned with a high precision at a position of the film formation step which is a second positioning position by deviation between a conveying amount input in a control device in advance and a rotation amount of the ball screw detected by an encoder.

The movable mold 2 is moved to the side of the stationary mold 1 by the mold opening/closing device, so that the body molding part of a slide mold is provided in the film formation apparatus.

At that time, as is similar to the primary molding, guide posts 52 and guide holes 51 for positioning the slide mold are provided on the opposed surfaces of the slide mold and the stationary mold, respectively. Immediately before the guide posts 52 are inserted in the guide holes 51, signals are transmitted to a power supply control device from the mold opening/closing device.

By the signals, the power supply control device outputs signals for stopping power supply to the servomotor, and the servomotor is unlocked, so that the guide posts 52 are inserted in the guide holes 51 in a state that the slide mold is movable.

Thereby, the stationary mold and the slide mold are precisely positioned. Because the power supply to the servomotor is stopped, this position is corrected as a position corresponding to the conveying amount input to the control unit in advance.

The masking plate is attached to not the film formation apparatus, but the stationary mold 1, so that accuracy of alignment with the molded article can become high. FIGS. 2A and 2B illustrate this state.

The body 31 which remains in the slide mold 3 is set in the film formation apparatus.

In this embodiment, a normally used film formation apparatus is used for film formation.

The inside of the film formation apparatus is made vacuum by a vacuum pump (not shown), and high energy particles are collided with the surfaces of a target, so that atoms of the target are discharged. A film is formed on the inner surface of the body 31 using a spattering method for form a film on the inner surface of the main body 31.

The movable mold 2 is moved in the downward direction of the drawing by the mold opening/closing device, so that the slide mold 3 is separated from the film formation apparatus to perform mold opening.

After completion of the mold opening, signals are transmitted to the power supply control device. By the signals, the power supply control device outputs signals for starting power supply to the servomotor, so that the the power supply to the servomotor is started.

Then, the secondary molding step will be described.

The servomotor 9 is driven, and the slide mold 3 is positioned by the ball screw 7 at the deep part of the mold (on the right side of the drawing) which is the molding part of the secondary molding step.

The slide mold 3 is positioned with a high precision at a position of the secondary molding step which is a third positioning position by deviation between a conveying amount input in a control unit in advance and a rotation amount of the ball screw detected by an encoder.

The movable mold 2 is moved to the side of the stationary mold 1 by the mold opening/closing device, so that the slide mold 3 is matched with the stationary mold 1.

At that time, as is similar to the primary molding step, guide posts 52 and guide holes 51 for positioning the slide mold are provided on the parting line of the slide mold and the stationary mold. Immediately before the guide posts 52 are inserted in the guide holes 51, signals are transmitted to a power supply control device from the mold opening/closing device.

By the signals, the power supply control device outputs signals for stopping power supply to the servomotor, and the servomotor is unlocked, so that the guide posts 52 are inserted in the guide holes 51 in a state that the slide mold is movable.

Thereby, the stationary mold and the slide mold are precisely positioned. Because the power supply to the servomotor is stopped, this position is corrected as a position corresponding to the conveying amount input to the control unit in advance.

In this manner, after the molds are matched at high precision, the molds are clamped. FIGS. 3A and 3B illustrate this state.

The butt parts 35 and 36 of the body 31 having a film thereon on the slide mold 3 and the lens part 32 remaining in the stationary mold 1 are made to butt against each other (see FIG. 4).

A space 33 is formed by the butt parts. A molten resin which is injected from the injection molding machine is filled in the space through the sprues. The body and the lens part are molten with each other by the resin in the space.

After the resin filled in the space is cooled and hardened, the stationary mold 1 and the movable mold 2 are opened by the mold opening/closing device again, so that the slide mold 3 is separated from the stationary mold 1.

Then, the body 31 is butt-welded with the lens part 32 to complete one hollow molded article.

The movable mold 2 is moved in the downward direction of the drawing by the mold opening/closing device, so that the slide mold 3 is separated from the stationary mold 1 to perform mold opening.

Thereby, the hollow molded article is removed.

In this manner, after the hollow molded article is removed, signals are transmitted to the power supply control device at the time of completion of mold opening. By the signals, the power supply control device outputs signals for starting power supply to the servomotor, so that the power supply to the servomotor is started.

The servomotor 9 is driven again, the slide mold 3 is positioned at the center of the mold which is a position of the primary molding step by the ball screw 7, and the steps of molding another molded article proceed again.

After this cycle is repeated several times, the film formation apparatus is maintained regularly.

Then, a maintaining method will be described.

First, the slide mold is moved to the molding part of the secondary molding step. Thereby, a space is formed on the surface opposed to the slide mold of the film formation apparatus.

Then, the bolts 16 are removed, and the masking plate 14 is removed from the stationary mold 1, and the masking plate is cleaned. Since the masking plate can be removed, the plate can be easily cleaned.

Also, the removed portion serves as an opening, so that maintenance such as exchange of a target in the film formation apparatus which is provided inside the stationary mold can be easily done from the opening.

This embodiment shows a constitution that the film formation apparatus 4, the molding part 5 of the stationary mold, and the lens molding part 6 of the stationary mold are linearly provided in the stationary mold 1 in this order at equal intervals, but the present invention is not limited to this constitution.

The film formation apparatus 4 only has to be arranged at a position for avoiding the position between the molding part 5 of the stationary mold and the lens molding part 6 of the stationary mold. For example, the molding part 5 of the stationary mold, the lens molding part 6 of the stationary mold, and the film formation apparatus 4 may be, of course, arranged in this order.

In this embodiment, by arranging the film formation part on the end of the stationary mold, the sprues and the runners for supplying the resin to the molding parts can be easily arranged.

Also, the film formation apparatus which has a poor heat resistance can be arranged at a position as far as possible from a heat source, so that influences on the film formation apparatus by heats can be minimized.

Also, the present invention can cope with a hot runner specification.

By arranging the film formation apparatus on the end of the stationary mold, and moving the slide mold to the molding part of the secondary molding step, a space is formed on the surface of the film formation part of the stationary mold opposed to the slide mold, so that operability of maintenance of the film formation apparatus is improved.

Also, accuracy of alignment with the molded article can become high by attaching the masking plate to the stationary mold 1.

Furthermore, by making the masking plate detachable, the plate can be simply cleaned.

The portion after removal of the plate serves as an opening, so that maintenance such as exchange of a target of the film formation apparatus which is provided inside the stationary mold can be easily done from the opening.

This application claims the benefit of Japanese Patent Applications No. 2005-276495, filed September 22, 2005, and No. 2006-238503, filed September 4, 2006, which are hereby incorporated by reference herein in their entirety.

## Claims

1. A mold apparatus for producing a hollow molded article, comprising: a first mold and a second mold having a first molding part for molding a first divided body of the molded article, a second molding part for molding a second divided body of the molded article, and the first mold having a film formation part for forming a film on at least a part of the divided bodies,
wherein the first mold and/or the second mold are slid to position the first molding part of the second mold with the film formation part, the first molding part of the first mold, or the second molding part of the first mold, and
wherein the film formation part, the first molding part of the first mold and the second molding part of the first mold are linearly arranged in this order.

2. The mold apparatus according to claim 1, wherein the first molding part is a main body molding part, and the second molding part is a lens molding part.

3. The mold apparatus according to claim 1, wherein the first mold is a stationary mold, and the second mold is a slide mold provided on a movable mold which is driven in a direction away from the stationary mold at a time of mold opening.

4. The mold apparatus according to claim 1, wherein the first mold is a movable mold, and the second mold is a slide mold which is provided on the stationary mold.

5. The mold apparatus according to claim 1, wherein a masking plate is detachably attached onto a surface of the film formation part of the first mold opposed to the second mold.

6. A method for producing a hollow molded article, using a mold apparatus comprising a first mold and a second mold having a first molding part for molding a
first divided body of the molded article, a second molding part for molding a second divided body of the molded article, and the first mold having a film formation part, the method including:
a primary molding step of molding divided bodies of a molded article by the first mold and the second mold, respectively;
the first mold and/or the second mold are slid to position the first molding part of the second mold with the film formation part;
a film formation step of forming a film on at least a part of the first divided body;
the first mold and/or the second mold are slid to position the first molding part of the second mold with the second molding part of the first mold; and
a secondary molding step of butting the divided bodies against each other at parts thereof, and injecting a resin to the butt parts,
wherein the film formation part, the first molding part, and the second molding part are provided in the first mold in this order to mold a hollow molded article.

7. The method for molding a hollow molded article according to claim 6, wherein the first mold is a stationary mold, and the second mold is a slide mold provided on a movable mold which is driven in a direction away from the stationary mold at a time of mold opening.

8. The method for molding a hollow molded article according to claim 6, wherein the first mold is a movable mold, and the second mold is a slide mold which is provided on the stationary mold.

9. The method for producing a hollow molded article according to claim 6, wherein a masking plate is detachably attached on a surface of the film formation part of the first mold opposed to the second mold, the first mold and/or the second mold are slid to position the first molding part of the second mold with the second molding part of the first mold, the masking plate is detached, and maintenance of a film formation unit provided on the film formation part is performed.
